Europäisches Patentamt

**European Patent Office**

**Office européen des brevets**

(19)

(11) Veröffentlichungsnummer: **0 241 640**
**B1**

(12) **EUROPÄISCHE PATENTSCHRIFT**

(45) Veröffentlichungstag der Patentschrift:
08.08.90

(51) Int. Cl.⁵: **F16D 23/06**

(21) Anmeldenummer: 87100668.0

(22) Anmeldetag: 20.01.87

(54) Sperrsynchronisiereinrichtung für ein Zahnräderwechselgetriebe eines Kraftfahrzeugs.

(30) Priorität: 16.04.86 DE 3612741

(43) Veröffentlichungstag der Anmeldung:
21.10.87 Patentblatt 87/43

(45) Bekanntmachung des Hinweises auf die Patenterteilung:
08.08.90 Patentblatt 90/32

(84) Benannte Vertragsstaaten:
**DE ES FR GB IT NL SE**

(56) Entgegenhaltungen:
**EP-A- 0 100 025**
**DE-A- 2 904 063**
**DE-B- 2 059 218**
**DE-B- 2 523 953**
**US-A- 3 035 674**
**US-A- 3 175 412**

(73) Patentinhaber: **Dr.Ing.h.c. F. Porsche Aktiengesellschaft, Porschestrasse 42, D-7000 Stuttgart 40(DE)**

(72) Erfinder: **Müller, Robert, Badstrasse 21, D-7251 Mönsheim(DE)**

ACTORUM AG

## Beschreibung

Die Erfindung betrifft eine Sperrsynchronisiereinrichtung für ein aus Losrädern und Festrädern bestehendes Zahnräderwechselgetriebe eines Kraftfahrzeuges nach dem Oberbegriff des Anspruchs 1.

Eine derartige Sperrsynchronisiereinrichtung ist aus EP-A 100 025 bekannt.

Dabei ist eine Führungsmuffe auf einer Antriebswelle befestigt. In eine Außenverzahnung der Führungsmuffe greift eine konzentrische, innere Schaltverzahnung einer Schaltmuffe so ein, daß sie drehfest, aber axial verschieblich zur Führungsmuffe ist. Beim Längsverschieben kommt die Schaltverzahnung der Schaltmuffe in Eingriff mit einer entsprechenden Schaltverzahnung, die an einem Ringansatz des zu kuppelnden Losrades angebracht ist. Zuvor jedoch wird das Losrad mit der Schaltmuffe synchronisiert durch einen dazwischen angeordneten Synchronring, dessen Außenkonus mit dem Innenkonus der Schaltmuffe in Reibverbindung steht.

Zugleich greifen radial nach innen weisende Fortsätze am Synchronring in entsprechende Aussparungen ein, die am Ringansatz des Losrades angebracht sind. Der Verschiebebewegung der Schaltmuffe und des Synchronrings wirkt ein Federring entgegen, der in einer Ringnut des Synchronringes geführt ist. Ein Nachteil dieser Synchronisiereinrichtung ist es, daß bei höherer Getriebedrehzahl unter der Einwirkung der Fliehkraft eine Entlastung des Federringes eintritt und somit die Voranlegekraft reduziert wird.

Es ist die Aufgabe der Erfindung, den Federring an der Synchronisiereinrichtung so anzuordnen, daß seine Funktion durch Einwirken der Fliehkraft nicht beeinträchtigt wird.

Zur Lösung dieser Aufgabe sind die im Kennzeichen des Anspruches 1 aufgeführten Merkmale vorgesehen. Wenn der Federring in einer Ringnut an der Schaltverzahnung des Losrades radial beweglich geführt ist, wird seine Federkraft durch die Fliehkraft erhöht und die Voranlegekraft in gewünschter Weise vergrößert. Begünstigt wird diese Bauweise dadurch, daß nach Anspruch 2 die Schaltmuffe durch entsprechende Bemessung unterschiedlicher Eingriffswinkel zwischen ihrer Schaltverzahnung und einer beidseitig angeschrägten Außenverzahnung der Führungsmuffe arretierbar ist. Diese in DE-B 2 523 953 beschriebene Arretiervorrichtung macht eine Hinterlegung an der Schaltverzahnung des Losrades entbehrlich und ermöglicht es, den Federring in einer Ringnut an der Schaltverzahnung anzuordnen.

Ein Ausführungsbeispiel der Erfindung ist in der Zeichnung dargestellt und wird nachfolgend erläutert.

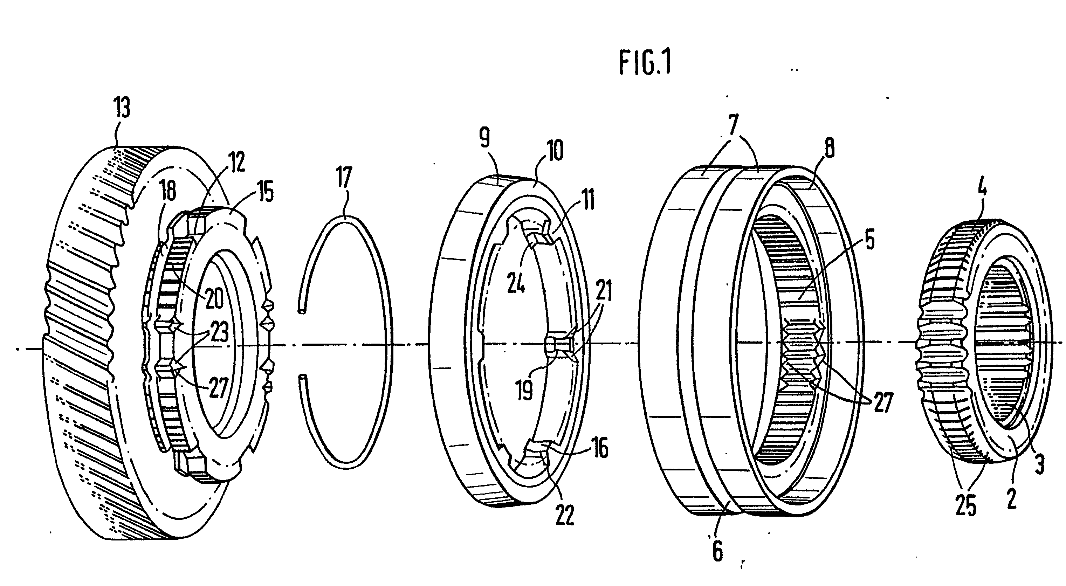

Fig. 1 perspektivische Darstellung der Bauelemente der Sperrsynchronisiereinrichtung,

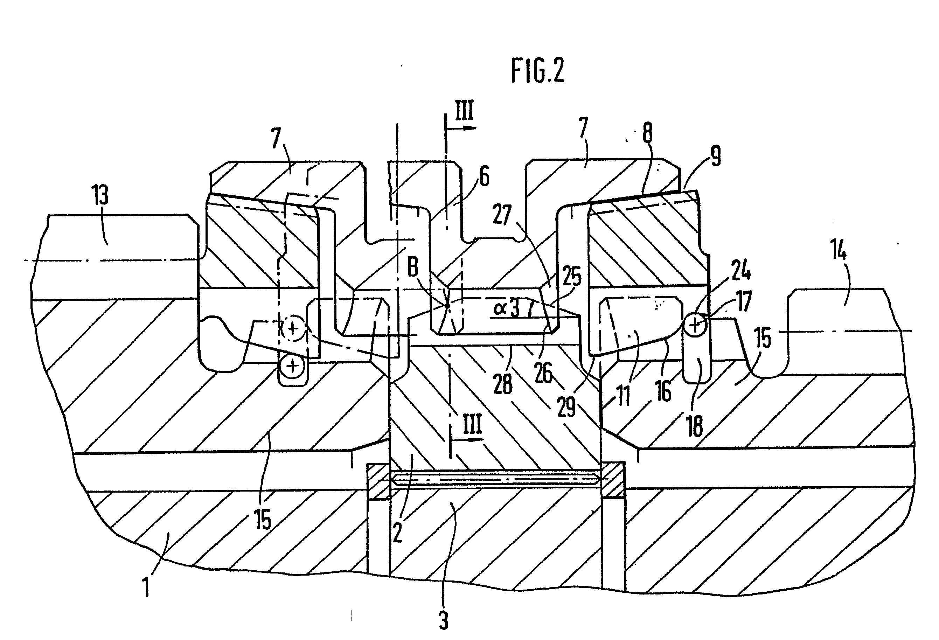

Fig. 2 Längsschnitt durch die Sperrsynchronisiereinrichtung mit Schaltmuffe in mittiger Neutralstellung und gestrichelt in linker Einrückstellung,

Fig. 3 Eingriffswinkel an der Schaltverzahnung und der Außenverzahnung der Führungsmuffe.

Auf einer Antriebswelle 1 eines Kraftfahrzeug-Zahnräderwechselgetriebes ist eine Führungsmuffe 2 durch eine innere Mitnahmeverzahnung 3 drehfest und auch axial fixiert. Außen ist die Führungsmuffe 2 mit einer Außenverzahnung 4 versehen, in die eine innere Schaltverzahnung 5 einer Schaltmuffe 6 eingreift. Beidseits der mittigen Schaltverzahnung 5 ist an der Schaltmuffe 6 ein Ringteil 7 angebracht, dessen Innenkonus 8 mit dem Außenkonus 9 eines Synchronrings 10 reibschlüssig zusammenwirkt, sobald die Schaltmuffe 6 auf der Führungsmuffe 2 nach links oder rechts axial verschoben wird. Am Innenumfang des Synchronrings 10 sind sechs symmetrisch verteilte Klauen 11 angeformt, die in Zahnlücken 12 eines am linken Losrad 13 und am rechten Losrad 14 angebrachten Ringansatzes 15 einführbar sind. Die inneren Umfangsflächen 16 der Klauen 11 verengen sich zur Schaltmuffe 6 hin. An ihnen liegt ein Federring 17 unter Vorspannung an. Der Federring 17 ist in einer Ringnut 18, die in dem Ringansatz 15 von außen eingestochen ist, radial beweglich geführt.

Wird die Schaltmuffe 6 in Richtung der gestrichelt gezeichneten linken Einrückstellung bewegt, so wird zunächst über die Konusflächen Reibschluß mit dem Synchronring 11 hergestellt. Der Synchronring 11 wird mitgenommen und ein schmaler Bereich 19 seiner Klauen 11 legt sich durch Verdrehen an den die Zahnlücken 12 begrenzenden Zähnen der Schaltverzahnung 20 des Ringansatzes 15 an. Zugleich legen sich die Sperrflächen 21 der Klauen 11, die als Übergangszonen zwischen dem schmalen Bereich 19 und einem breiten Bereich 22 ausgebildet sind, an die Abweisflächen 23 des Ringansatzes 15 des Losrades 13 an. Solange noch keine Drehzahlgleichheit zwischen dem Losrad 13 und der Schaltmuffe 6 erreicht ist, wird hierdurch ein Durchschalten der Schaltmuffe 6 verhindert. In dieser Axiallage der Schaltmuffe 6 wird der Synchroning 10 durch den Federring 17, der in eine an der inneren Umfangsfläche 16 der Klauen 11 ausgebildete Rille 24 formschlüssig eingreift, axial arretiert.

Sobald Drehzahlgleichheit erreicht ist, sinkt die zwischen den Abweisflächen 23 und Sperrflächen 21 axial wirkende, der Schaltkraft entgegengesetzte Sperrkraft ab, so daß die Schaltmuffe 6 bis zur vollen Einrücklage verschiebbar wird. Hierzu wird zunächst der Federring 17 aus der Rille 24 herausgehoben und über die konischen inneren Umfangsflächen 16 der Klauen 11 immer weiter radial zusammengedrückt, bis die linke Endlage erreicht ist und die Kupplung der Schaltmuffe 6 mit dem Losrad 13 vollzogen ist.

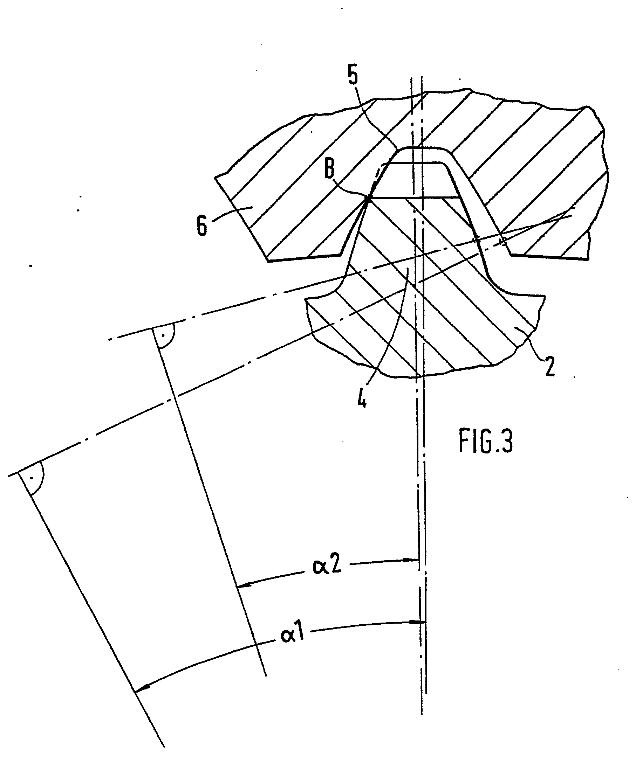

Um nun die Schaltmuffe 6 in dieser Lage festzuhalten und ein Gangspringen zu vermeiden, wird auf sie durch entsprechende Ausbildung ihrer Schaltverzahnung 5 und der Außenverzahnung 4 der Führungsmuffe 2 eine Sperrkraft ausgeübt, die bei Drehmomentbelastung wirksam ist. Hierzu ist gemäß Fig. 3 der Eingriffswinkel $\alpha 1$ der Schaltverzahnung 5 der Schaltmuffe 6 größer gewählt als der Eingriffswinkel $\alpha 2$ der Außenverzahnung 4 der Führungsmuffe 2; es beträgt $\alpha 1$ etwa gleich 15°; $\alpha 2$ etwa gleich 12°. Zusätzlich ist an der Außenverzahnung 4 der Führungsmuffe 2 nach beiden Seiten hin eine Anschrägung 25 zu einem Winkel α3 etwa gleich 15° bis 35° angebracht. Wie in DE-B 25 23 953 ausführlich beschrieben ist, ergibt sich bei eingelegtem Gang ein Arbeitspunkt B zwischen der Verschneidungskante 26 der Einschaltschräge 27 der Schaltverzahnung 15 der Schaltmuffe 6 und der Anschrägung 25. Auf diese Weise wird eine Hinterlegung, das bedeutet gegenläufige Abschrägungen an den Schaltverzahnungen der Schaltmuffe 6 und des Ringansatzes 5 des Losrades 13, die fertigungstechnisch aufwendig und teuer ist, vermieden.

Beim Gangwechsel wird der Synchronring 10 mit dem radial vorgespannten Federring 17 in die Ausgangslage zurückgedrückt. Zur Begrenzung der axialen Rückführung des Synchronrings 10 ist der Grundkreisdurchmesser 28 der Außenverzahnung 4 der Führungsmuffe 2 größer gewählt als der die Klaue 11 nach innen begrenzende kleinste Durchmesser 29.

**Patentansprüche**

1. Sperrsynchronisiereinrichtung für ein aus Losrädern und Feständern bestehendes Zahnräderwechselgetriebe eines Kraftfahrzeuges, mit einer auf einer Führungsmuffe (2) drehfest, aber unter Verspannen eines Federringes (17) axial verschieblich angeordneten Schaltmuffe (6), die mit einer Schaltverzahnung (5) zum Eingriff in eine entsprechende Schaltverzahnung (20) an einem Losrad (13, 14) und einer radial nach innen gerichteten Konusfläche (8) zum Zusammenwirken mit dem Außenkonus (9) eines Synchronrings (10) ausgerüstet ist, der mit mehreren, symmetrisch am Umfang verteilten, radial nach innen vorstehenden Klauen (11) ausgestattet ist, die in breitere Zahnlücken (12) des Losrades (13, 14) eingreifen, die zwischen der Schaltverzahnung (20) des Losrades (13, 14) durch Abheben eines oder mehrerer Zähne gebildet sind, wobei der Synchronring in den Zahnlücken des Losrades begrenzt drehbar ist und die gesamte Sperreinrichtung im Bauraum der Schaltverzahnung (15) integriert ist, dadurch gekennzeichnet, daß der Synchronring (10) bei seiner Längsverschiebung durch konische, innere Umfangsflächen (16) seiner Klauen (11) den Federring (17) radial verspannt, wobei der Federring (17) in einer axial hinter der Schaltverzahnung (20) des Losrades (13) ausgebildeten Ringnut (18) radial beweglich geführt ist, und wobei beidseits der Klauen (11) Sperrflächen (21) zum Zusammenwirken mit entsprechend geneigten Abweisflächen (23) an den die Zahnlücken (12) begrenzenden Zähnen der Schaltverzahnung (20) des Losrades (13) angebracht sind.

2. Sperrsynchronisiereinrichtung nach Anspruch 1, dadurch gekennzeichnet, daß die Schaltmuffe (6) durch entsprechende Bemessung unterschiedlicher Eingriffswinkel (α1, α2) zwischen ihrer Schaltverzahnung (5) und einer beidseitig angeschrägten Außenverzahnung (4) der Fühungsmuffe (2) in der jeweiligen linken bzw. rechten Einrückstellung unter Momentbelastung axial arretierbar ist.

3. Sperrsynchronisiereinrichtung nach Anspruch 1, dadurch gekennzeichnet, daß die Klauen (11) des Synchronrings (10) in Axialrichtung abgesetzt sind und so einen schmäleren Bereich (19) und einen breiteren Bereich (22) aufweisen, und daß die Sperrflächen (21) als Übergangszonen zwischen den beiden unterschiedlichen Breiten (19, 22) der Klauen (11) ausgebildet sind.

4. Sperrsynchronisiereinrichtung nach Anspruch 1, dadurch gekennzeichnet, daß der Grundkreisdurchmesser (28) der Außenverzahnung (4) der Führungsmuffe (2) größer ist als der die Klauen (11) nach innen begrenzende, kleinste Durchmesser (29), wodurch die axiale Rückführbewegung des Synchronrings (10) durch Anlage seiner Klauen (11) an der Führungsmuffe (2) begrenzt ist.

5. Sperrsynchronisiereinrichtung nach Anspruch 1 und 3, dadurch gekennzeichnet, daß die einander gleichen Schrägungswinkel einer stirnseitigen Einschaltschräge (27) der Schaltverzahnung (5) der Schaltmuffe (6) und des Losrades (13) unterschiedlich sind von den einander gleichen Schrägungswinkeln der Sperrflächen (21) der Klauen (11) und Abweisflächen (23) des Losrades (13), so daß die Schrägungswinkel für das leichte Durchschalten und sichere Sperren unabhängig voneinander optimiert werden können.

6. Sperrsynchronisiereinrichtung nach Anspruch 1, dadurch gekennzeichnet, daß der Federring (17) bei mittiger Neutralstellung der Schaltmuffe (6) in eine Rille (24) an der inneren Umfangsfläche (16) der Klauen (11) formschlüssig eingreift.

**Revendications**

1. Dispositif de synchronisation à verrouillage pour une boîte de vitesse à pignons de véhicule automobile se composant de pignons libres et de pignons fixes, avec un manchon de commutation (6) disposé fixe en rotation mais soumis à la tension d'une ressort annulaire (17) de façon à se déplacer axialement sur un manchon de guidage (2), qui est muni d'une denture de connexion (5) destinée à s'engrener avec une denture de connexion (20) sur un pignon libre (13, 14) et une surface conique (8) dirigée radialement vers l'intérieur pour coopérer avec le cône extérieur (9) d'une bague de synchronisation (10) qui est équipée de plusieurs griffes (11) faisant saillie radialement vers l'intérieur, et réparties symétriquement à la périphérie, qui s'engagent dans des entredents plus larges (12) du pignon libre (13, 14), formés entre la denture de connexion (20) du pignon libre (13, 14) par soulèvement d'une ou plusieurs dents, la bague de synchronisation pouvant tourner de façon limitée dans les entredents du pignon libre, et la totalité du dispositif de synchronisation à verrouillage (15) étant intégrée dans l'espace de construction, caractérisé en ce que la bague de synchronisation (10) lors de son déplacement longitudinal, tend radialement le ressort annulaire (17) au moyen des surfaces intérieurs périphériques (16) de ses griffes (11), celui-ci étant guidé de façon à se déplacer radialement dans une gorge annulaire (18) formée axialement à l'arrière de la denture de connexion (20) du pignon libre (13), et des surfaces de blocage (21) étant prévues des deux côtés des griffes (11) pour coopérer avec des surfaces inclinées correspondantes (23) sur les dents limitant les entredents (12) de la denture de connexion (20) du pignon libre (13).

2. Dispositif de synchronisation à verrouillage selon la revendication 1, caractérisé en ce que le manchon de commutation (6) peut être bloqué axialement par une fixation correspondante des angles d'engrènement (α1 et α2, ) entre leur denture de connexion (5) et une denture extérieure (4) inclinée des deux côtés du manchon de guidage (2) respectivement dans les positions d'embrayage gauche ou droite, en étant soumis à un moment.

3. Dispositif de synchronisation à verrouillage selon la revendication 1, caractérisé en ce que les griffes (11) de la bague de synchronisation (10) sont écartées en direction axiale, et présentent ainsi une zone plus étroite (19) et une zone plus large (22), et en ce que les surfaces de blocage (21) sont sous forme de zones de transition entre les deux largeurs différentes (19, 22) des griffes (11).

4. Dispositif de synchronisation à verrouillage selon la revendication 1, caractérisé en ce que le diamètre primitif (28) de la denture extérieure (4) du manchon de guidage (2) est plus grand que le diamètre le plus faible (29) limitant les griffes (11) vers l'extérieur, ce par quoi le mouvement de retour de la bague de synchronisation (10) est limité par la butée des griffes (11) sur le manchon de guidage (2).

5. Dispositif de synchronisation à verrouillage selon les revendications 1 et 3, caractérisé en ce que les angles d'inclinaison égaux entre eux d'un chanfrein de démarrage (27) du côté frontal de la denture de connexion (5) du manchon de commutation (6) et du pignon libre (13), sont différents des angles égaux entre eux des surfaces de blocage (91) des griffes (11) et des surfaces de déflexion (23) du pignon libre (13), de telle sorte que les angles d'inclinaison pour une connexion facile et un blocage plus sûr, peuvent être optimisés indépendamment l'un de l'autre.

6. Dispositif de synchronisation à verrouillage selon la revendication 1, caractérisé en ce que le ressort annulaire (17) en position neutre médiane du manchon de commutation (6) s'engage sans glissement dans une gorge (24) sur la surface périphérique intérieure (16) des griffes (22).

**Claims**

1. A locking synchromesh device for a motor vehicle gearbox comprising loose gears and fixed gears, having a gearshift sleeve (6) mounted on a guide sleeve (2) so as to be rotationally fixed but axially displaceable under the action of a spring ring (17) and provided with a gearshift toothing (5) for engagement with a corresponding gearshift toothing (20) on a loose gear (13, 14) and a cone surface (8) orientated radially inwards for cooperation with the outer cone (9) of a synchronizing ring (10) which is provided with a plurality of dogs (11) distributed symmetrically on the periphery and projecting radially inwards and engaging in wide tooth gaps (12) in the loose gear (13, 14) which are formed between the gearshift toothing (20) of the loose gear (13, 14) by the removal of one or more teeth, the synchronizing ring being rotatable to a limited extent in the tooth gaps of the loose gear and the entire locking device being integrated in the structural space of the gearshift toothing (15), characterized in that during its longitudinal displacement the synchronizing ring (10) radially tensions the spring ring (17) by means of inner conical peripheral faces (16) of the dogs (11) thereof, the spring ring (17) being radially movable in an annular groove (18) formed axially to the rear of the gearshift toothing (20) of the loose gear (13), and locking faces (21) being provided on both sides of the dogs (11) for cooperating with correspondingly inclined deflexion faces (23) on the teeth – adjacent to the tooth gaps (12) – of the gearshift toothing (20) of the loose gear (13).

2. A locking synchromesh device according to Claim 1, characterized in that the gearshift sleeve (6) is axially lockable under moment loading by appropriate dimensioning of different angles of engagement (α1, α2) between its gearshift toothing (5) and an external toothing (4) – chamfered on both sides – of the guide sleeve (2) in the respective lefthand or right-hand engagement position.

3. A locking synchromesh device according to Claim 1, characterized in that the dogs (11) of the synchronizing ring (10) are offset in the axial direction and so have a narrower area (19) and a wider area (22), and the locking faces (21) are formed as transition zones between the two different widths (19, 22) of the dogs (11).

4. A locking synchromesh device according to Claim 1, characterized in that the base circle diameter (28) of the external toothing (4) of the guide sleeve (2) is greater than the smallest diameter (29) defining the dogs (11) towards the inside, as a result of which the axial return movement of the synchronizing ring (10) is limited by the abutment of its dogs (11) on the guide sleeve (2).

5. A locking synchromesh device according to Claims 1 and 2, characterized in that the mutually equal chamfer angles of an end engagement slope (27) of the gearshift toothing (5) of the gearshift sleeve (6) and of the loose gear (13) are different from the mutually equal chamfer angles of the locking faces (21) of the dogs (11) and deflexion faces (23) of the loose gear (13), so that the chamfer angles for easy through passage and secure locking can be optimized independently of each other.

6. A locking synchromesh device according to Claim 1, characterized in that in the central neutral position of the gearshift sleeve (6) the spring ring (17) engages with positive locking in a groove (24) on the inner peripheral face (16) of the dogs (11).

FIG.1

EP 0 241 640 B1

FIG.2

EP 0 241 640 B1

EP 0 241 640 B1

FIG.3